# EUROPÄISCHE PATENTSCHRIFT

(11) **EP 2 420 479 B1**
(45) Veröffentlichungstag und Bekanntmachung des Hinweises auf die Patenterteilung: **12.12.2018**
(21) Anmeldenummer: 11173640.1
(22) Anmeldetag: 12.07.2011
(51) Int. Cl.: C03B 23/025, C03B 32/02

(54) **Gebogenes Glas- oder Glaskeramik-Formteil und Herstellverfahren**
Curved glass ceramic moulded part and method for producing same
Pièce de formage en vitrocéramique ondulée et procédé de fabrication

(30) Priorität: 16.08.2010 DE 102010036999
(43) Veröffentlichungstag der Anmeldung: 22.02.2012
(73) Patentinhaber: Schott AG, 55122 Mainz (DE)
(72) Erfinder: Muehlke, Oliver, 65366 Geisenheim (DE); Krumpholtz, Frank, 55278 Uelversheim (DE)
(74) Vertreter: Herrmann, Jochen

(56) Entgegenhaltungen:
- EP-A2- 1 187 176
- DE-C- 661 704
- FR-A1- 2 770 515
- JP-A- S6 321 229
- JP-U- H01 147 227
- US-A- 2 317 904
- US-A- 4 081 263

## Beschreibung

Die Erfindung betrifft ein Glaskeramik-Formteil, das einen bogenförmig ausgebildeten Bauteilbereich aufweist.
Die Erfindung betrifft weiterhin ein Verfahren zur Herstellung eines gebogenen Glaskeramik-Formteils, wobei ein Grünglaszuschnitt in einen Temperaturzustand gebracht wird, in dem seine Viskosität eine Verformung ermöglicht, und wobei der Grünglaszuschnitt auf eine gebogene Stützfläche eines Formwerkzeuges aufgeformt wird.
Aus der DE 101 02 576 A1 ist ein Verfahren zum Herstellen eines derartigen Glaskeramik-Formteils bekannt. Hierbei wird ein Formwerkzeug verwendet, das einen muldenförmigen Aufnahmebereich aufweist. Über dem Aufnahmebereich wird ein Grünglaszuschnitt positioniert und unter Temperatureinwirkung in einen plastischen Zustand derart überführt, dass das Grünglas in die Mulde einsinkt. Dabei legt sich der Glaswerkstoff an die Muldenwand an. Anschließend wird auf einem weiter erhöhten Temperaturniveau eine Keramisierung des Grünglaswerkstoffes durchgeführt. Nach einer Abkühlphase kann das dreidimensional verformte und gebogene Glaskeramik-Formteil aus dem Formwerkzeug entnommen werden. Häufig werden gebogene Glaskeramik-Formteile benötigt, die einen Bogenbereich größer als 180° überdecken. Da jedoch mit dem aus der DE 101 02 576 A1 bekannten Schwerkraftsenken nur Bogenbereiche kleiner gleich 180° erzeugt werden können, müssen zwei oder mehrere Glaskeramik-Formteile gefertigt und dann im Endprodukt zusammengesetzt werden. Dies erfordert einen höheren Aufwand bei der Rahmenkonstruktion und sieht optisch nicht so ansprechend, wie ein einstückiges Glasteil ohne Unterbrechungen aus.

Aus dem Stand der Technik sind auch Verfahren bekannt, bei denen Glas- oder Glaskeramik-Formteile herstellbar sind, die einen Bogenbereich größer als 180° überdecken können. Hierzu wird zunächst ein Glasrohr gefertigt, wie dies beispielsweise in der DE 10 2005 031 657 A1 beschrieben ist. Anschließend wird aus dem Glasrohr der gewünschte Segmentbogen ausgeschnitten. Im Falle einer Glaskeramik findet zusätzlich ein Keramisierungsschritt vor oder nach dem Zuschnitt statt. Auf Grund der dreidimensionalen Form des Glasrohres ist das Zuschneiden eines Bogensegmentes aus einem Rohr sehr aufwendig und nicht mit Standard-Glasbearbeitungsmaschinen möglich. Auch die anschließende Kantenbearbeitung erfordert einen deutlich erhöhten Aufwand im Vergleich zur Flachglasbearbeitung. Findet die Keramisierung vor dem Zuschnitt auf Endformat statt - dies erleichtert den Keramisierungsschritt, da ein Rohr stehend, ohne aufwendige stützende Aufbauten keramisiert werden kann - hat dies den Nachteil, das die bei der Keramisierung auf der gesamten Oberfläche entstehende glasige Schicht an allen Bearbeitungsstellen unterbrochen wird. Die glasige Schicht hat den Vorteil, dass die Oberfläche eine signifikant erhöhte Widerstandsfähigkeit gegenüber chemischen Angriffen, insbesondere Glaskorrosion, aufweist. Auch die mechanische Festigkeit wird durch eine nach der Keramisierung durchgeführte Kantenbearbeitung herabgesetzt, da ein durch die Keramisierung ausgelöster Ausheilungsprozess von Mikrorissen der bearbeiteten Kanten nicht mehr stattfindet.

Findet die Keramisierung nach der Kantenbearbeitung statt, bildet sich zwar eine gleichmäßige glasige Schicht auf der gesamten Oberfläche aus, jedoch muss nun das Glasteil mit einer entsprechenden Vorrichtung während des Keramisierungsprozesses gestützt werden. Ohne Unterstützung würde sich das Bauteil, durch die während des Keramisierungsprozesses erreichten niedrigen Viskositäten, verwerfen.

US 2,317,904 offenbart eine Vorrichtung zum Biegen einer Glasscheibe in eine Kehlform, wobei sich die Biegung über einen Bogenbereich größer als 180° erstreckt. Die Glasscheibe wird über einer Form, welche eine invertierte Kehle aufweist, gehalten und in dieser Position erwärmt. Nach Erweichen der Glasscheibe wird diese auf die Form abgesenkt, wobei sie sich aufgrund der Schwerkraft teilweise um die Form biegt. Gegenüberliegend und seitlich des oberen Zentrums der Form sind zwei Rollen gelagert, die sich an die beiden Schenkel der Glasscheibe anlegen und diese aufgrund ihres Gewichts nach unten und an die Form drücken.

US 4,081,263 offenbart ein Verfahren zum Biegen einer Glasscheibe. Die Glasscheibe wird auf ein Stützelement mit zylindrischem Querschnitt aufgelegt und dann erwärmt. Schwerkraftbedingt biegt sich die Glasscheibe um das Stützelement, wobei ein Biegeradius entsteht.

Aus FR 2 770 515 ist ein Verfahren zur Herstellung eines Glasbands beschrieben. Mittels Prägewalzen werden Vertiefungen in das Glasband eingedrückt.

EP 1 187 176 A2 offenbart einen eingefärbten Filter in Form eines Glaskeramik-Rohrs. Das Glaskeramik-Rohr weist dabei einen Längsschlitz auf. Es wird als Bauteil eines Xenon-Scheinwerfers eingesetzt.

Weitere Umformverfahren für Gläser sind in den Druckschriften JP S 63 21229 A, JP H 01147227 U und DE 661704 C beschrieben.

Es ist Aufgabe der Erfindung, ein Verfahren der eingangs erwähnten Art bereit zu stellen, mit dem sich gebogene Glaskeramik-Formteile auf einfache Weise herstellen lassen.

Es ist weiterhin Aufgabe der Erfindung, ein Glaskeramik-Formteil zu schaffen, das mit dem erfindungsgemäßen Verfahren hergestellt werden kann und gute Stabilitäts- und Anwendereigenschaften aufweist.

Die das Verfahren betreffende Aufgabe der Erfindung wird mit den Merkmalen des Patentanspruchs 1 gelöst.

Erfindungsgemäß ist es vorgesehen, dass der Grünglaszuschnitt während des Umformprozesses mittels wenigstens eines bewegbaren Niederhalters um die Stützfläche gebogen wird.

Erfindungsgemäß wird somit der Grünglaszuschnitt zunächst in einen verformbaren Zustand überführt und dann mit dem Niederhalter zwangsgeführt auf die Stützfläche des Formwerkzeugs aufgeformt. Auf diese Weise lassen sich Glaskeramik-Formteile erzeugen, die mit einem Bogenbereich größer als 180° ausgeführt sind. Dabei lässt sich insbesondere eine homogene Glasdicke in Abhängigkeit des eingesetzten Glaszuschnitts im gesamten Bauteil problemlos erzeugen, da der Niederhalter den Grünglaszuschnitt kontinuierlich über seine Beweglichkeit auf die Stützfläche des Formwerkzeuges aufformt. Da der Grünglaszuschnitt bei dem Umformvorgang hinsichtlich seiner Glasdicke keine oder nur eine unwesentliche Änderung erfährt, bildet sich auch eine homogene Transmission im gesamten Bauteil aus. Darüber hinaus zeichnet sich das geformte Glaskeramik-Formteil durch im Wesentlichen homogene Oberflächenbeschaffenheit aus, abhängig von der Oberflächenqualität des eingesetzten Glaszuschnitts.

Nach der erfolgten Verformung wird der Grünglaszuschnitt keramisiert. Erfindungsgemäß ist zudem vorgesehen, dass der Niederhalter in eine Endverformungsposition gefahren wird, in der er auf dem verformten Grünglaszuschnitt aufliegt, und dass der Niederhalter während der Keramisierungs- und Abkühlphase des aus dem Glaszuschnitt geformten Glaskeramik-Formteils in der Endverformungsposition gehalten wird. Auf diese Weise wird eine plastische Rückstellung des verformten Bauteils solange verhindert, bis eine ausreichend tiefe Erstarrungstemperatur, bzw. eine ausreichend hohe Viskosität erreicht ist.

Gemäß einer bevorzugten Erfindungsvariante kann es vorgesehen sein, dass der Niederhalter während des Umformprozesses längs der gebogenen Stützfläche verfahren wird, wobei der Grünglaszuschnitt im Bereich zwischen dem Niederhalter und der Stützfläche verformt wird. Da der Niederhalter die Stützfläche in geringem Abstand nachfährt, werden über den gesamten Biegeprozess hinweg gleich bleibende Biegebedingungen erreicht. Dies führt insbesondere auch zu der homogenen Verformung, ohne Auswirkungen auf den Dickenverlauf und die Oberflächenqualität des Glaskeramik-Formteils.

Zur Optimierung des Umformprozesses kann es vorgesehen sein, dass der Grünglaszuschnitt von wenigstens zwei gegenläufig verfahrenden Niederhaltern verformt wird. Dabei wird zudem erreicht, dass die beiden Niederhalter den Grünglaszuschnitt über ihre gegenläufige Verfahrbewegung in Position halten und damit gegebenenfalls auf weitere positionierende Niederhalter verzichtet werden kann.

Um die Oberfläche des Glaskeramik-Formteils möglichst unbeschädigt beziehungsweise unbeeinflusst zu erhalten, kann es nach einer Verfahrensvariante der Erfindung vorgesehen sein, dass der Niederhalter mittels einer oder mehrerer Rollen auf dem Grünglaszuschnitt abgerollt wird.

Zur Vereinfachung des Umformwerkzeugs, werden sämtliche Umformbewegungen und Umformkräfte durch die Schwerkraft der einzelnen Bauteile erzeugt. Dies verhindert den Einsatz von zusätzlicher Antriebs- und Stelltechnik und ermöglicht den Einsatz in handelsüblichen Durchlauföfen. Durch Variation von Drehpunkten und Gewichten der Bauteile, können Umformkräfte und andere Verfahrensparameter eingestellt werden. Das Werkzeug beginnt mit der Umformung des Glaszuschnitts sobald dessen Viskosität niedrig genug ist um verformbar zu sein. Dies ermöglicht auch die Verformung von heutzutage üblichen Hochleistungsglaskeramiken mit hohen Keimbildnergehalten, die während des thermischen Keramisierungsprozesses nur ein kurzes Zeitfenster mit für eine Verformung ausreichend niedrigen Viskosität bereitstellen

Eine besonders bevorzugte Verfahrensführung nach der Erfindung ist dergestalt, dass der Grünglaszuschnitt vor dessen Umformung mit einer Dekorbeschichtung und/oder einer Funktionsbeschichtung versehen und/oder mechanisch bearbeitet wird. Diese Dekor- oder Funktionsbeschichtung wird während des Umformprozesses nicht beeinträchtigt. Als Funktionsbeschichtungen können beispielsweise IR-reflektierende Schichten, spiegelnde Schichten, antireflektierende Schichten etc. aufgebracht sein. Für Dekorbeschichtungen ist es denkbar, keramische Farben auf den Glaszuschnitt aufzubringen. Da der Glaszuschnitt in seiner Ausgangslage als flächiges Bauteil vorliegt, ist die Beschichtung besonders einfach durchzuführen. Der thermische Prozess für die Umformung dient dann gleichzeitig als Einbrand des Dekors.

Als mechanische Bearbeitung ist beispielsweise ein Kantenschliff, insbesondere eine Facettierung beziehungsweise ein Einbringen von Durchbrüchen oder Ausbrüchen denkbar. Nach der Keramisierung weisen die bearbeiteten Bereiche ebenso wie die anschließenden Oberflächenbereiche eine gleichmäßige glasige Schicht auf.

Die das Glaskeramik-Formteil betreffende Erfindung wird mit den Merkmalen des unabhängigen Anspruchs 6 dadurch gelöst, dass das Glaskeramik-Formteil einen bogenförmig ausgebildeten Bauteilbereich aufweist, wobei sich der bogenförmige Bauteilbereich über einen Bogenbereich größer als 180° erstreckt, wobei eine oder mehrere Körperkanten des Glaskeramik-Formteils zumindest bereichsweise eine bearbeitete Kantengeometrie aufweisen und/oder wobei das Glaskeramik-Formteil eine oder mehrere Kanten aufweist, die einen Durchbruch oder eine Aussparung begrenzt, und wobei das Glaskeramik-Formteil an den bearbeiteten Kanten eine glasige Zone aufweist.

Dieses Glaskeramik-Formteil kann aus einem Grünglaszuschnitt gefertigt werden, bei dem bereits in seiner Ausgangslage Aussparungen, Durchbrüche, beispielsweise Bohrungen, oder dergleichen ausgenommen sein können. Weiterhin können die Kanten des Grünglaszuschnittes bearbeitet und insbesondere mit einem Facettenschliff versehen sein. Diese Bearbeitungsschritte lassen sich einfach an dem Glaszuschnitt durchführen. Am verformten und ggf. keramisierten Formteil weisen nun, da die Umformung als abschließender Verfahrensschritt durchgeführt wird, die bearbeiteten Kantenbereiche die gleichen Festigkeitseigenschaften wie die anschließenden Oberflächenbereiche auf. Insbesondere wird gegenüber den herkömmlichen Glaskeramik-Formteilen, bei denen die Kantenbearbeitung nachträglich durchgeführt ist, keine Beschädigung der glasigen Zone im Kantenbereich durchgeführt. Dies führt zu einer höheren Bruchfestigkeit des fertigen Glaskeramik-Formteiles. Außerdem können die während der mechanischen Bearbeitung des Grünglaszuschnittes im Kantenbereich eingebrachten etwaigen Beschädigungen wie Mikrorisse während des thermischen Prozesses ausheilen. Schließlich zeichnet sich das Glaskeramik-Formteil auch durch eine gute chemische Beständigkeit, beispielsweise bezüglich Glaskorrosion aus, denn sämtliche Kantenbereiche haben die gleiche glasige Schicht, wie die anschließenden unbearbeiteten Oberflächenbereiche.

Gemäß einer Erfindungsvariante kann es vorgesehen sein, dass der bogenförmige Bauteilbereich zylindrisch, oder elliptisch, oder ähnlich ausgebildet ist. Auch unsymmetrische Formen, wie beispielsweise eine Spiral- oder Schneckenform sind darstellbar.

Es hat sich gezeigt, dass sich ein besonders zuverlässiger Herstellprozess mit gleich bleibend guten Bauteilqualitäten dann erreichen lässt, wenn der bogenförmige Bauteilbereich einen Durchmesser von 300 mm bis 1000 mm aufweist. Bevorzugterweise weist der bogenförmige Bauteilbereich einen Bogenbereich > 180° bis < 360° auf, wobei besonders bevorzugt ein Bogenbereich von ≥ 210° bis ≤ 330° erzeugt wird.

Eine besonders gute Prozessierbarkeit, sowie Bauteilqualität bezüglich Geometrieabweichungen und Oberflächenqualität wird dann erreicht, wenn die Wanddicke des Glaskeramik-Formteils größer als 2 mm beträgt und vorzugsweise im Bereich zwischen 2 mm und 8 mm gewählt ist. Abhängig vom Bauteildurchmesser wird in diesem Dickenbereich von 2 mm bis 8 mm bei einer Biegung um die neutrale Faser des Glaswerkstoffes im Zugbereich und im Druckbereich eine annährend gleiche Oberflächenqualität erhalten, da die relative Dehnung auf der Zugseite beziehungsweise Stauchung auf der Druckseite zu vernachlässigen ist.

Die erzielbaren Dickenschwankungen sind abhängig von den Dickenschwankungen des ebenen Glaszuschnitts und werden durch den Umformprozess nicht beeinflusst. Hier besteht ein weiterer Vorteil, da im Vergleich zur Rohrherstellung bei der Flachglasherstellung im Allgemeinen engere Toleranzen bezüglich Dickenschwankung darstellbar sind.

Auch die Oberflächenqualität des Ausgangswerkstoffs wird durch das Verfahren nicht beeinflusst. Dadurch sind auch Oberflächenstrukturen, die beispielsweise bei der Flachglasherstellung durch Walzen eingebracht werden können, darstellbar.

Die Erfindung wird im Folgenden anhand eines in den Zeichnungen dargestellten Ausführungsbeispiels näher erläutert. Es zeigen:
- Fig. 1 bis 3: in schematischer Darstellung einen Umformprozess und
- Fig. 4: ein dreidimensional verformtes Glaskeramik-Formteil.

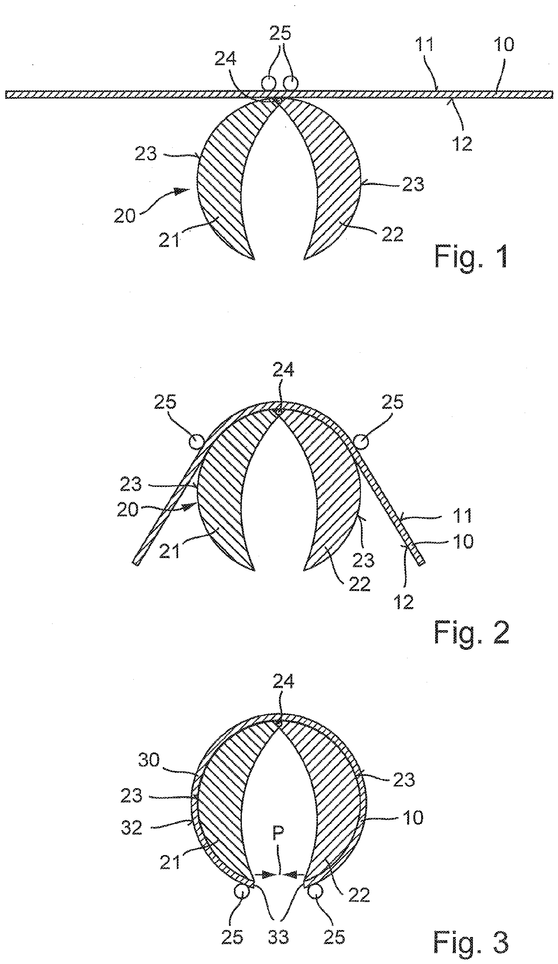

Fig. 1 zeigt ein Formwerkzeug 20, das zwei gegeneinander bewegliche Formteile 21 und 22 aufweist. Die beiden Stützkörper 21 und 22 sind dabei um eine bewegliche Verbindung 24 gekoppelt. Vorzugsweise wird die bewegliche Verbindung von einem Scharnier mit einer Schwenkachse gebildet. Die beiden Stützkörper 21 und 22 weisen jeweils eine bogenförmige Stützfläche 23 auf, wobei die beiden Stützflächen 23 eine gemeinsame Teil-Zylinderfläche schaffen. Im Bereich der beweglichen Verbindung 24 ist ein rechteckiger oder quadratischer Grünglaszuschnitt 10 aufgelegt. Denkbar sind auch andere Umrissformen für den Grünglaszuschnitt 10. Der Grünglaszuschnitt 10 ist mit seiner Unterseite 12 oben auf die Stützkörper 21 und 22 aufgelegt. Auf diese Oberseite 11 des Grünglaszuschnittes 10 wirken zwei Niederhalter 25 ein. Diese halten den Grünglaszuschnitt 10 auf den Stützflächen 23. In einem anschließenden Verfahrensschritt wird der Grünglaszuschnitt 10 auf eine Temperatur erwärmt, in der er in einem Viskositätszustand vorliegt, in dem eine Verformung durchführbar ist. Beispielsweise kann ein Grünglas, das unter der Bezeichnung "Robax" von der Anmelderin bezogen werden kann, bei Temperaturen oberhalb 700° C verformt werden. Wenn der Grünglaszuschnitt 10 auf diesem Temperaturniveau vorliegt, beginnen die beiden Niederhalter 25 das Glas um die Stützflächen 23 herum aufzuformen. Die Viskosität des Glases und die Umformkraft der Niederhalter bestimmen dabei die Umformgeschwindigkeit. Die Niederhalter 25 sind mit Rollen ausgestattet, die auf der Oberseite 11 des Grünglaszuschnittes 10 abrollen, um eine Oberflächenbeschädigung zu vermeiden.

Wie die Fig. 2 erkennen lässt, biegt sich der Grünglaszuschnitt 10 um die Stützflächen 23 herum, wobei die Niederhalter 25 ihn auf die Stützflächen 23 aufformen. Die Verformung ist vorliegend dann abgeschlossen, wenn die Niederhalter 25 die in Fig. 3 gezeigte Position erreicht haben. Dann ist der Grünglaszuschnitt 10 zu einem zylinderförmigen Formteil umgeformt. Anschließend wird das Temperaturniveau auf einen Temperaturbereich angehoben, der unterhalb der Keramisierungstemperatur des zum Einsatz kommenden Grünglaswerkstoffes liegt. Bei der Verwendung von Robax-Glas liegt dieser Temperaturbereich zwischen 760° C und 800° C. In diesem Temperaturbereich wird der verformte Grünglaskörper eine Zeit lang gehalten, so dass sich durch die Verformung bedingte Oberflächenunebenheiten ausgleichen, was zu einer verbesserten Oberflächenqualität führt. Anschließend wird die Temperatur auf die Keramisierungstemperatur (bei Robax über 800° C) angehoben. Nachdem die Keramisierung abgeschossen ist, wird die Temperatur reduziert, bis das gefertigte Glaskeramik-Formteil 30 erstarrt ist. Das Glaskeramik-Formteil 30 liegt nun, wie dies die Fig. 3 zeigt, mit seiner Innenwand 12 auf den Stützflächen 23 auf. Die Niederhalter 25 wurden bis zu diesem Verfahrensschritt in der in Fig. 3 gezeigten Endverformungsposition gehalten, um ein plastisches Rückformen des verformten Körpers zu verhindern. Um das Glaskeramik-Formteil 30 aus dem Formwerkzeug 20 ausheben zu können, werden nun die beiden Stützkörper 21, 22 um die bewegliche Verbindung 24 radial nach innen geschwenkt, was durch den Doppelpfeil P symbolisiert ist. Dadurch werden die Stützflächen 23 von der Innenwand 12 abgeschwenkt. Nun kann das Glaskeramik-Formteil 30 leicht entnommen werden. Anschließend werden die beiden Stützkörper 21, 22 wieder entgegen den in Fig. 3 gezeigten Doppelpfeilen P rückgestellt. Die Niederhalter 25 werden in ihre in Fig. 1 gezeigten Ausgangsposition zurückgebracht, so dass ein neuer Grünglaszuschnitt 10 dem Formwerkzeug 20 zugeordnet werden kann.

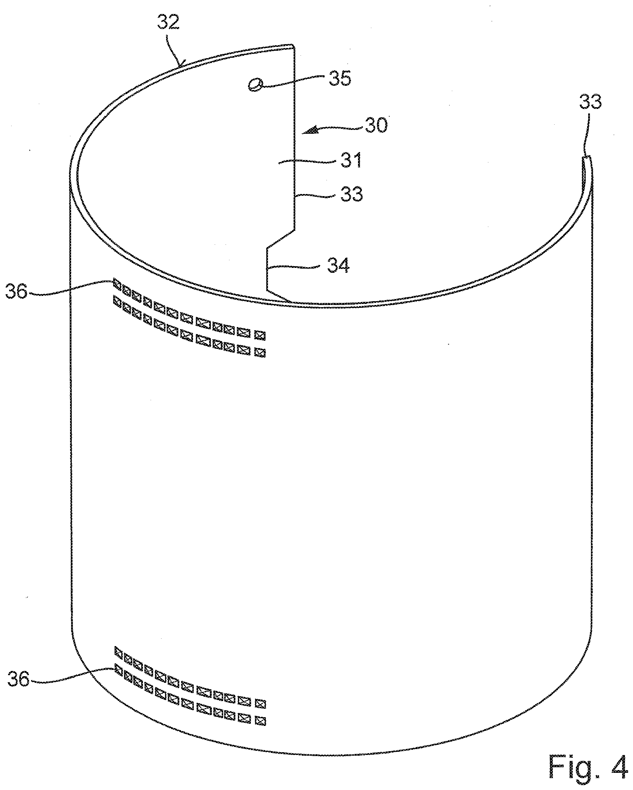

In Fig. 4 ist in perspektivischer Frontansicht ein Glaskeramik-Formteil 30 näher gezeigt. Wie diese Darstellung erkennen lässt, weist das Glaskeramik-Formteil 30 einen zylindrisch ausgebildeten Bauteilbereich auf, der sich über einen Bogenbereich von ca. 270° erstreckt. Dieses Glaskeramik-Formteil 30 wurde nach dem Verfahren gemäß den Fig. 1 bis 3 aus einem Grünglaszuschnitt 10 mit rechteckförmiger Geometrie gefertigt. Dabei wies der Grünglaszuschnitt 10 Begrenzungskanten 33 auf, aus denen seitlich eine Aussparung 34 ausgenommen wurde. Zudem wurden in dem flächigen Grünglaszuschnitt 10 Durchbrüche, nämlich Bohrungen 35 eingebracht. Schließlich wurde der Grünglaszuschnitt 10 auch mit einer Dekorschicht 36 versehen. Dieser Grünglaszuschnitt 10 wurde nun gemäß den Fig. 1 bis 3 umgeformt und im Falle einer Glaskeramik keramisiert, so dass der in Fig. 4 gezeigte Körper als Glaskeramik-Formteil 30 erhalten wurde. Dabei sind dann die Aussparungen 34 im Bereich des geöffneten Bogenbereiches angeordnet und begrenzen diesen.

## Patentansprüche

1. Verfahren zur Herstellung eines gebogenen Glaskeramik-Formteils (30), wobei ein Grünglaszuschnitt (10) in einen Temperaturzustand gebracht wird, in dem seine Viskosität eine Verformung ermöglicht, und wobei der Grünglaszuschnitt (10) auf eine gebogene Stützfläche (23) eines Formwerkzeugs aufgeformt wird,
**dadurch gekennzeichnet,**
**dass** der Grünglaszuschnitt (10) während des Umformprozesses mittels wenigstens eines bewegbaren Niederhalters (25) auf die Stützfläche aufgeformt wird, dass der verformte Grünglaszuschnitt (10) nach dessen Verformung keramisiert wird, wobei der Niederhalter (25) in eine Endverformungsposition gefahren wird, in der er auf dem verformten Grünglaszuschnitt (10) aufliegt, und dass der Niederhalter (25) während einer Keramisierungs- und Abkühlphase des aus dem Glaszuschnitt geformten Glaskeramik-Formteils (30) in der Endverformungsposition gehalten wird.

2. Verfahren nach Anspruch 1,
**dadurch gekennzeichnet,**
**dass** der Niederhalter (25) während des Umformprozesses längs der gebogenen Stützfläche (23) verfahren wird, wobei der Grünglaszuschnitt (10) im Bereich zwischen dem Niederhalter (25) und der Stützfläche (23) verformt wird.

3. Verfahren nach Anspruch 1 oder 2,
**dadurch gekennzeichnet,**
**dass** der Grünglaszuschnitt (10) von wenigstens zwei gegenläufig verfahrenden Niederhaltern (25) verformt wird.

4. Verfahren nach einem der Ansprüche 1 bis 3,
**dadurch gekennzeichnet,**
**dass** der Niederhalter (25) mittels einer oder mehrerer Rollen auf dem Grünglaszuschnitt (10) abgerollt wird.

5. Verfahren nach einem der Ansprüche 1 bis 4,
**dadurch gekennzeichnet,**
**dass** der Grünglaszuschnitt (10) vor dessen Umformung mit einer Dekorbeschichtung und/oder einer Funktionsbeschichtung versehen wird.

6. Glaskeramik-Formteil (30), das einen bogenförmig ausgebildeten Bauteilbereich aufweist, wobei sich der bogenförmige Bauteilbereich über einen Bogenbereich größer als 180° erstreckt, wobei eine oder mehrere Körperkanten des Glaskeramik-Formteils (30) zumindest bereichsweise eine bearbeitete Kantengeometrie aufweisen, und/oder wobei das Glaskeramik-Formteil (30) eine Kante aufweist, die einen Durchbruch (35) oder eine Aussparung (34) begrenzt, und wobei das Glaskeramik-Formteil (30) an der/den bearbeiteten Kante(-n) eine glasige Zone aufweist.

7. Glaskeramik-Formteil (30) nach Anspruch 6,
dass einen bogenförmigen Bauteilbereich in zylindrischer oder elliptischer oder ähnlicher Form aufweist.

8. Glaskeramik-Formteil (30) nach Anspruch 7,
**dadurch gekennzeichnet,**
**dass** der bogenförmige Bauteilbereich einen Durchmesser von 300 mm bis 1000 mm aufweist.

9. Glaskeramik-Formteil (30) nach einem der Ansprüche 6 bis 8,
**dadurch gekennzeichnet,**
**dass** der bogenförmige Bauteilbereich einen Bogenbereich > 180° bis < 360°, vorzugsweise ≥ 210° bis ≤ 330° überspannt.

10. Glaskeramik-Formteil (30) nach einem der Ansprüche 6 bis 9,
**dadurch gekennzeichnet,**
**dass** die Wanddicke des Glas- oder Glaskeramik-Formteils (30) einheitlich ausgebildet ist und ≥ 2 mm, vorzugsweise im Bereich zwischen 2 mm und 8 mm gewählt ist.

## Claims

1. Process for producing a curved glass-ceramic moulding (30), where a cut-to-size green glass blank (10) is brought to a temperature state in which its viscosity allows deformation and the cut-to-size green glass blank (10) is formed on a curved support surface (23) of a moulding tool, **characterized in that** the cut-to-size green glass blank (10) is formed on the support surface by means of at least one movable holding-down device (25) during the forming process, **in that** the formed cut-to-size green glass blank (10) is ceramicized after being formed, where the holding-down device (25) is moved into a final forming position in which it rests on the formed cut-to-size green glass blank (10), and **in that** the holding-down device (25) is held in the final forming position during a ceramicizing and cooling phase of the glass-ceramic moulding (30) formed from the cut-to-size glass blank.

2. Process according to Claim 1, **characterized in that** the holding-down device (25) is moved along the curved support surface (23) during the forming process, with the cut-to-size green glass blank (10) being formed in the region between the holding-down device (25) and the support surface (23) .

3. Process according to Claim 1 or 2, **characterized in that** the cut-to-size green glass blank (10) is formed by at least two holding-down devices (25) which move counter to one another.

4. Process according to any of Claims 1 to 3, **characterized in that** the holding-down device (25) is rolled down on the cut-to-size green glass blank (10) by means of one or more rollers.

5. Process according to any of Claims 1 to 4, **characterized in that** the cut-to-size green glass blank (10) is provided with a decorative coating and/or a functional coating before being formed.

6. Glass-ceramic moulding (30) which has an arc-shaped component region, wherein the arc-shaped component region extends over an arc region of greater than 180°, one or more body edges of the glass-ceramic moulding (30) have, at least in regions, a worked edge geometry and/or the glass-ceramic moulding (30) has an edge which bounds a hole (35) or a cut-out (34) and the glass-ceramic moulding (30) has a vitreous zone at the worked edge(s).

7. Glass-ceramic moulding (30) according to Claim 6, that has an arc-shaped component region having a cylindrical or elliptical or similar shape.

8. Glass-ceramic moulding (30) according to Claim 7, **characterized in that** the arc-shaped component region has a diameter of from 300 mm to 1000 mm.

9. Glass-ceramic moulding (30) according to any of Claims 6 to 8, **characterized in that** the arc-shaped component region spans an arc range of from > 180° to < 360°, preferably from ≥ 210° to ≤ 330°.

10. Glass-ceramic moulding (30) according to any of Claims 6 to 9, **characterized in that** the wall thickness of the glass or glass-ceramic moulding (30) is uniform and is ≥ 2 mm, preferably in the range from 2 mm to 8 mm.

## Revendications

1. Procédé de fabrication d'une pièce moulée en vitrocéramique incurvée (30), selon lequel une coupe de verre vert (10) est amenée à un état de température auquel sa viscosité permet une déformation, et selon lequel la coupe de verre vert (10) est moulée sur une surface support incurvée (23) d'un outil de moulage, **caractérisé en ce que**
la coupe de verre vert (10) est moulée sur la surface support pendant le processus de façonnage au moyen d'au moins un dispositif de retenue mobile (25), **en ce que** la coupe de verre vert déformée (10) est céramisée après sa déformation, le dispositif de retenue (25) étant conduit à une position de déformation finale à laquelle il repose sur la coupe de verre vert déformée (10), et **en ce que** le dispositif de retenue (25) est maintenu à la position de déformation finale pendant une phase de céramisation et de refroidissement de la pièce moulée en vitrocéramique (30) formée à partir de la coupe de verre.

2. Procédé selon la revendication 1, **caractérisé en ce que** le dispositif de retenue (25) est conduit le long de la surface support incurvée (23) pendant le processus de façonnage, la coupe de verre vert (10) étant déformée dans la zone située entre le dispositif de retenue (25) et la surface support (23).

3. Procédé selon la revendication 1 ou 2, **caractérisé en ce que** la coupe de verre vert (10) est déformée par au moins deux dispositifs de retenue (25) qui se déplacent en direction opposée.

4. Procédé selon l'une quelconque des revendications 1 à 3, **caractérisé en ce que** le dispositif de retenue (25) est déroulé au moyen d'un ou de plusieurs rouleaux sur la coupe de verre vert (10).

5. Procédé selon l'une quelconque des revendications 1 à 4, **caractérisé en ce que** la coupe de verre vert (10) est munie d'un revêtement décoratif et/ou d'un revêtement fonctionnel avant son façonnage.

6. Pièce moulée en vitrocéramique (30), qui comprend une zone de composant configurée sous forme incurvée, la zone de composant incurvée s'étendant sur une plage d'arc de plus de 180°, un ou plusieurs bords de corps de la pièce moulée en vitrocéramique (30) présentant au moins par zones une géométrie de bord usinée, et/ou la pièce moulée en vitrocéramique (30) comprenant un bord qui délimite une rupture (35) ou un évidement (34), et la pièce moulée en vitrocéramique (30) comprenant une zone vitreuse au niveau du ou des bords usinés.

7. Pièce moulée en vitrocéramique (30) selon la revendication 6, qui comprend une zone de composant incurvée de forme cylindrique ou elliptique ou similaire.

8. Pièce moulée en vitrocéramique (30) selon la revendication 7, **caractérisée en ce que** la zone de composant incurvée présente un diamètre de 300 mm à 1 000 mm.

9. Pièce moulée en vitrocéramique (30) selon l'une quelconque des revendications 6 à 8, **caractérisée en ce que** la zone de composant incurvée s'étend sur une plage d'arc de > 180° à < 360°, de préférence de ≥ 210° à ≤ 330°.

10. Pièce moulée en vitrocéramique (30) selon l'une quelconque des revendications 6 à 9, **caractérisée en ce que** l'épaisseur de paroi de la pièce moulée en verre ou vitrocéramique (30) est configurée sous forme uniforme, et est choisie de façon à être ^ 2 mm, de préférence dans la plage comprise entre 2 mm et 8 mm.
